# EUROPEAN PATENT SPECIFICATION

(11) **EP 4 180 786 B1**
(45) Date of publication and mention of the grant of the patent: **16.04.2025**
(21) Application number: 21208432.1
(22) Date of filing: 16.11.2021
(51) Int. Cl.: G01K 7/22, H01C 7/04

(54) **AN IONICALLY CONDUCTIVE COMPOSITION FOR USE IN A THERMAL SENSOR**
IONISCH LEITENDE ZUSAMMENSETZUNG ZUR VERWENDUNG IN EINEM THERMOSENSOR
COMPOSITION CONDUCTRICE IONIQUE DESTINÉE À ÊTRE UTILISÉE DANS UN CAPTEUR THERMIQUE

(43) Date of publication of application: 17.05.2023
(73) Proprietor: Henkel AG & Co. KGaA, 40589 Düsseldorf (DE)
(72) Inventor: Roschek, Tobias, 42699 Solingen (DE); Goethel, Frank, 09125 Chemnitz (DE); Negele, Carla, 41472 Neuss (DE); Rossberg, Tanja, 42781 Haan (DE)

(56) References cited:
- DE-A1- 102013 224 020
- JP-B2- 6 801 193
- US-A1- 2010 326 825
- US-A1- 2020 225 097

## Description

### Technical field of the invention

The present invention relates to an ionically conductive composition for use in a thermal sensor. The ionically conductive composition used in the thermal sensor comprises an ionic liquid and a thermoplastic resin.

### Background of the invention

Temperature sensing is critical in many applications, for example measuring the environmental temperature or a process control or medical applications such as measuring a body temperature. Surfaces which can accurately sense the changes in temperature are critical in ordinary applications, but they are also important for the future applications such as electronic skins and soft robotics. The temperature sensing surfaces used in these applications have thousands of thermal sensors deposited on the surface, and the deposition is ideally made by printing technologies.

There is already a wide variety of different kind of temperature sensing materials available such as negative temperature coefficient (NTC) thermistor-based ceramic/metal composites, printed NTC and resistance temperature detectors. An example is described in JP 6 801193 B2. Temperature sensing via thermal coefficient is a well-established method (thermistor). Typically, metals, metal oxides or semiconductors are used in the thermistors. However, these materials often require expensive base materials such as platinum or elaborated processing methods.

NTC ceramics are widely used in temperature sensing due their high thermal coefficient and good stability. However, NTC thermistor-based ceramic/metal composites are complicated to make due their complex and high temperature fabrication processes. Further, they are not suitable for flexible applications because of their stiffness. NTC thermistor-based ceramic/metal composites are not printable, and therefore, their application on a large scale is difficult. One attempt to improve NTC ceramic properties and processability has been usage of micron sized manganese spinel oxide particles dispersed in a benzocyclobutene matrix.

Material suitable to be used as a printed NTC involves a complex synthesis pathway. On the other hand, resistance temperature detector is expensive, typically Pt based, and is not straightforward to make on a large scale. Further disadvantage for the resistance detector is that it is not printable.

Like the resistance temperature detector, a thermocouple is not straightforward to make on a large scale and it is not printable. Further, the thermocouple only provides a temperature difference.

Temperature sensing devices based on silicon are known in the art. Silicon based temperature sensing devices are formed by using at least one silicon layer and at least one electrode or contact to define a thermistor structure.

Temperature sensitive inks have been one way to provide a printable thermal sensing material for a large area. These inks exhibit a change in resistance which is dependent on a temperature. Such temperature sensitive inks may comprise metal oxide nanoparticles, a binder, a solvent, an optional dispersant, and an optional surfactant.

Another way to provide a printed temperature sensor is to use printable sensor material comprising semi-conducting micro-particles comprising a NTC material, wherein the micro-particles are mixed in a dielectric matrix (functioning as a binder). In this system the micro-particles contact each other to form an interconnected network through the dielectric matrix, and the interconnected network of micro-particles acts as a conductive pathway with negative temperature coefficient between the electrodes. US 2020/0225097 A1 discloses a flexible temperature sensor that includes a flexible substrate, an electrode and a mixed fluid arranged in contact with the electrode. The mixed fluid includes an ionic liquid and porous conductive particles. The sensor of US097 further has a protective plate to protect the mixed fluid.

Therefore, there is a need for a new printable material to be used in thermal sensor to measure temperature while the material allows easy devise fabrication and direct application of the sensor to the surfaces including skin.

### Brief description of the figures

Figure 1 illustrates impedance at 134Hz vs. temperature for example 1. The two curves correspond to two measurments on the same sample over different temperature ranges.
Figure 2 illustrates temperature coefficient of impedance vs. temperature for example 1.
Figure 3 illustrates DC measured resistances of example 1 vs. temperature.
Figure 4 illustrates the capacitor setup.
Figure 5 illustrates impedance at 134Hz vs. temperature for example 2.
Figure 6 illustrates the resulting TCR between -4%/K and -7%/K for example 2.
Figure 7 illustrates DC measured resistances of example 2.
Figure 8 illustrates the setup for measuring directly on skin.
Figure 9 illustrates DC resistance measured on skin compared to DC resistance vs. temperature of capacitor setup for example 3.
Figure 10 illustrates the temperature dependence of the impedance (1Hz and 134Hz).
Figure 11 illustrates impedance at 134Hz vs. temperature for example 4.
Figure 12 illustrates temperature coefficient of impedance at 1Hz vs. temperature for example 4.
Figure 13 illustrates temperature coefficient of impedance at 134Hz vs. temperature for example 4.
Figure 14 illustrates a comparison of the impedance spectra at various temperatures for a comparative example.
Figure 15 illustrates impedance at 1Hz vs. temperature for example 5.
Figure 16 illustrates comparison of impedance at 1Hz vs. temperature for example 5 and comparative example 1.
Figure 17 illustrates impedance at 1Hz vs. temperature for example 6.
Figure 18 illustrates impedance at 1Hz vs. temperature for example 7.
Figure 19 illustrates impedance at 1Hz vs. temperature for example 8.
Figure 20 illustrates impedance at 1Hz vs. temperature for example 9.
Figure 21 illustrates impedance at 0.1Hz vs. temperature for example 10.
Figure 22 illustrates a comparison of impedance at 1Hz vs. temperature for examples 5, 6 and 7 (comparison of polymers).
Figure 23 illustrates a comparison of impedance at 1Hz vs. temperature for examples 5 and 10 (comparison of ionic liquids).

### Summary of the invention

The present invention relates to a thermal sensor as defined in claim 1 comprising an ionically conductive composition and a conductive layer, wherein said ionically conductive composition comprises an ionic liquid and a thermoplastic resin and wherein said conductive layer is in contact with said ionically conductive composition.

The present invention encompasses a method for sensing a temperature from skin, a metal surface, and a conductive polymer by using a thermal sensor according to the present invention.

### Detailed description of the invention

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

An ionically conductive composition according to the present invention may be in a form a pressure sensitive adhesive (PSA) or a polymer comprising an ionic liquid.

The main idea of the present invention is to use ionically conductive pressure sensitive adhesives (PSAs) or polymers containing ionic liquids with a high thermal coefficient of resistance (TCR) as a temperature sensing material. PSAs or polymers in combination with an ionic liquid comprise several advantages: a large area of coating or printing allow devices with area-resolved temperature measurements; PSAs or polymers may be prepared using biocompatible materials allowing applications close to the body or even directly on skin; the adhesive property allows easy device fabrication or direct application of a sensor to skin; PSAs and polymers containing ionic liquids have reasonably high temperature coefficients; and PSAs and polymers containing ionic liquids do not require complicated synthesis or expensive base materials.

An ionically conductive composition according to the present invention comprises an ionic liquid which provides ionic conductivity. Preferably, the ionic liquid is a non-toxic, non-irritating ionic liquid. This is important especially for the applications wherein the thermal sensor is used to sense the temperature directly from skin.

The ionic liquid is selected from the group consisting of imidazolium acetates, imidazolium sulfonates, imidazolium chlorides, imidazolium sulphates, imidazolium phosphates, imidazolium thiocyanates, imidazolium dicyanamides, imidazolium benzoates, imidazolium triflates, choline triflates, choline saccharinate, choline sulfamates, pyridinium acetates, pyridinium sulfonates, pyridinium chlorides, pyridinium sulphates, pyridinium phosphates, pyridinium thiocyanates, pyridinium dicyanamides, pyridinium benzoates, pyridinium triflates, pyrrolidinium acetates, pyrrolidinium sulfonates, pyrrolidinium chlorides, pyrrolidinium sulphates, pyrrolidinium phosphates, pyrrolidinium thiocyanates, pyrrolidinium dicyanamides, pyrrolidinium benzoates, pyrrolidinium triflates, phosphonium acetates, phosphonium sulfonates, phosphonium chlorides, phosphonium sulphates, phosphonium phosphates, phosphonium thiocyanates, phosphonium dicyanamides, phosphonium benzoates, phosphonium triflates, sulfonium acetates, sulfonium sulfonates, sulfonium chlorides, sulfonium sulphates, sulfonium phosphates, sulfonium thiocyanates, sulfonium dicyanamides, sulfonium benzoates, sulfonium triflates, ammonium acetates, ammonium sulfonates, ammonium chlorides, ammonium sulphates, ammonium phosphates, ammonium thiocyanates, ammonium dicyanamides, ammonium benzoates, ammonium triflates and mixtures thereof.

According to the invention, said ionic liquid is selected from the group consisting of 1-ethyl-3-methylimidazolium acetate, 1-ethyl-3-methylimidazolium methane sulfonate, 1-ethyl-3-methylimidazolium trifluormethane sulfonate, 1-ethyl-3-methylimidazolium chloride, 1-ethyl-3-methylimidazolium ethyl sulphate, 1-ethyl-3-methylimidazolium diethylphosphate, 1-ethyl-3-methylimidazolium thiocyanate, 1-ethyl-3-methylimidazolium dicyanamide, 1-ethyl-3-methylimidazolium benzoate, choline trifluormethanesulfonate, choline saccharinate, choline acesulfamate, choline N-cyclohexylsulfamate, tris(2-hydroxyethyl)methylammonium methyl sulphate, 1-allyl-3-methylimidazolium bis(trifluoromethylsulfonyl)imide, choline acetate and mixtures thereof.

More preferably, said ionic liquid is selected from the group consisting of 1-ethyl-3-methylimidazolium benzoate, 1-ethyl-3-methylimidazolium methane sulfonate, 1-ethyl-3-methylimidazolium chloride, 1-ethyl-3-methylimidazolium trifluoromethane sulfonate, choline trifluoromethane sulfonate, 1-ethyl-3-methylimidazolium acetate, choline acetate, 1-ethyl-3-methylimidazolium diethylphosphate, 1-allyl-3-methylimidazolium bis(trifluoromethylsulfonyl)imide, 1-ethyl-3-methylimidazolium ethyl sulphate, 1-ethyl-3-methylimidazolium thiocyanate, 1-ethyl-3-methylimidazolium dicyanamide, choline saccharinate, choline acesulfamate, and mixture thereof.

Above mentioned ionic liquids are preferred because they have good solubility to the selected thermoplastic resins, and they have low toxicity.

Suitable commercially available ionic liquids for use in the present invention include, but are not limited to Basionics ST80, Basionics Kat1, Basionics BC01, Basionics VS11, Basionics VS03, and Efka IO 6785, all from BASF.

An ionically conductive composition according to the present invention may have said ionic liquid present in an amount from 0.1 to 50% by weight of the total weight of the dry composition, preferably from 0.3 to 25% and more preferably from 0.5 to 15%.

If the quantity of the ionic liquid is too low, the ionically conductive composition may not show any ionic conductivity, whereas too high quantity may decrease the adhesion properties. In an event when the thermal sensor is used to sense a temperature from skin, too high quantity may lead to skin irritation.

An ionically conductive composition according to the present invention comprises a thermoplastic resin. The thermoplastic resin may be in a form of a pressure sensitive adhesive (PSA) or a polymer.

Preferably said thermoplastic resin is selected from the group consisting of thermoplastic polyurethanes, polyesters, poly(meth)acrylates, polysiloxanes, halogenated vinyl or vinylidene polymers, polyamide copolymers, phenoxy resins, polyethers, polyketones, polyvinyl butyral, polyvinyl pyrrolidone, polyimides, polyols, cellulose and mixtures thereof, preferably thermoplastic resin is selected from the group consisting of thermoplastic polyurethanes, polyesters, poly(meth)acrylates, phenoxy resins and mixtures thereof.

Some selected, but non-limiting examples of suitable thermoplastic resins are an aromatic polyester based thermoplastic polyurethane, an aliphatic polyester thermoplastic polyurethane, a phenoxy polyhydroxylethers (PKHJ); linear, a high molecular weight saturated copolyester, amorphous polyester, and a (meth)acrylate resin comprising a (meth)acrylate monomer comprising OH-group.

In an embodiment wherein the temperature sensing is made directly from skin, the ionically conductive composition preferably comprises a (meth)acrylate resin comprising at least 10% of a (meth)acrylate monomer comprising OH-group by weight of the total weight of the (meth)acrylate resin. The applicant has found out that an ionically conductive composition comprising a (meth)acrylate resin comprising at least 10% of a (meth)acrylate monomer comprising OH-group provides good impedance and electrodes do not dry out and they can be used for longer period measurement (the higher OH content increases the water vapor transmission rate of the polymer, which contributes to increased breathability and longer wear times).

Suitable (meth)acrylate resin for use in the present invention is preferably formed from the monomers selected from the group consisting of hydroxyethyl acrylate, hydroxypropyl acrylate, hydroxybutyl acrylate, methyl methacrylate, butyl acrylate, ethylhexylacrylate, acrylic acid, C1-C18 alkyl (meth)acrylate, (meth)acrylamide, vinyl acetate, N-vinyl caprolactame, acrylonitrile, vinyl ether, benzyl (meth)acrylate, cyclohexyl (meth)acrylate, glycidyl (meth)acrylate and mixtures thereof, preferably formed from the monomers selected from the group consisting of hydroxyethyl acrylate, methyl methacrylate, butyl acrylate, ethylhexylacrylate and mixtures thereof, and more preferably said (meth)acrylate resin is formed from hydroxyethyl acrylate, methyl (meth)acrylate, butyl acrylate and ethylhexylacrylate.

Suitable commercially available thermoplastic resins in a form of a polymer for use in the present invention include but are not limited to Vitel 2200B and Vitel 5844B from Bostik, Estane 5703 from Lubrizol and PKHJ from Gabriel Performance Products.

Suitable commercially available thermoplastic resins in a form of a PSA use in the present invention include, but are not limited to Loctite DURO-TAK 222A, Loctite DURO-TAK 87-202A; Loctite DURO-TAK 87-402A; Loctite DURO-TAK 73-626A from Henkel

An ionically conductive composition according to the present invention may have said thermoplastic resin present in an amount from 10 to 99% by weight of the total weight of the dry composition, preferably from 40 to 98% and more preferably from 50 to 95%.

Lower thermoplastic resin quantity may lead to poor adhesion properties and is not beneficial to film forming properties, whereas too high quantity may lead to a poor conductivity.

An ionically conductive composition according to the present invention may further comprise an ionic conductivity promoter, preferably a non-toxic, non-irritating ionic conductivity promoter providing additional ionic conductivity. Preferably, the ionic conductivity promoter is semi-solid or solid under room temperature and can be dissolved in the ionic liquid. It has good compatibility with the thermoplastic resin used in the ionically conductive composition according to the present invention.

Preferably, the ionic conductivity promoter suitable for the present invention is selected from the group consisting of choline chloride, choline bitartrate, choline dihydrogen citrate, choline phosphate, choline gluconate, choline fumarate, choline carbonate, choline pyrophosphate and mixtures thereof.

According to the present invention, the ionically conductive composition may have an ionic conductivity promoter present in an amount from 0.1 to 35% by weight of the total weight of the composition, preferably from 0.5 to 25%, and more preferably from 1 to 15%.

If the quantity of the ionic conductivity promoter is too low, the ionically conductive composition may not show any ionic conductivity, whereas too high quantity may decrease the adhesion properties. In an event when the thermal sensor is used to sense a temperature from skin, too high quantity may lead to skin irritation.

An ionically conductive composition according to the present invention may further comprise electrically conductive particles.

The electrically conductive particles are preferably selected from the group consisting of metal particles and metal nanoparticles, metal containing particles and nanoparticles, graphite particles and nanoparticles, carbon particles and nanoparticles, carbon nanowires, conductive polymer particles and nanoparticles, and mixtures thereof, more preferably selected from the group consisting of silver containing particles, silver particles, copper particles, copper containing particles, silver nanowires, copper nanowires, graphite particles, carbon particles and mixtures thereof, and even more preferably selected from graphite particles, carbon particles and mixtures thereof.

An ionically conductive composition according to the present invention may have electrically conductive particles present in an amount from 0.1 to 30% by weight of the total weight of the dry composition, preferably from 0.5 to 25% and more preferably from 1 to 20%.

If the quantity of the electrically conductive particles is too low, it may lead to a poor conductivity, whereas too high quantity may lead to a loss of adhesion properties.

An ionically conductive composition according to the present invention may further comprise a polyether polyol. The ionic liquid provides the ionic conductivity. However, if the ionic liquid is not miscible with the thermoplastic resin, one will see poor ionic conductivity in the composition. In the embodiment, wherein PEG is added to the composition, the additional OH-groups from PEG make the system more polar and enhance the ionic conductivity of the ionic liquid in the thermoplastic resin.

Preferably, the polyether polyol is selected from the group consisting of polyethylene glycol, polypropylene glycol, polytetramethylene glycol, and more preferably polyethylene glycol having weight averaged molecular weight from 300 to 1000, more preferably from 350 to 750 and even more preferably from 380 to 420 g/mol, wherein the molecular weight is measured by gel permeation chromatography according to DIN 55672-1:2007-08 with THF as the eluent.

Suitable commercially available polyether polyol for use in the present invention include but is not limited to Kollisolv PEG 400 from BASF.

An ionically conductive composition according to the present invention may have a polyether polyol present in an amount from 0.1 to 50% by weight of the total weight of the composition, preferably from 0.5 to 25% and more preferably from 1 to 20%.

Too high polyether polyol quantity may lead to loss of adhesion properties.

An ionically conductive composition according to the present invention may further comprise a solvent. Preferably, the solvent, which may be comprised in the composition before drying, should be evaporated during drying whereby the layer of a ionically conductive composition can be formed. In a preferred embodiment, the ionically conductive composition according to the present invention is essentially free of the solvent after the drying.

The solvent is preferably selected from the group alcohols, ketones, esters, glycol esters, glycol ethers, ethers, acetates, carbonates and mixtures thereof, preferably, selected from the group consisting of dipropylene glycol, ethylene glycol, diethylene glycol, triethylene glycol, hexylene glycol, 1-methoxy-2-propanol, diacetone alcohol, 2-ethyl-1,3-hexanediol, tridecanol, 1,2-octanediol, butyldiglycol, alpha-terpineol or beta-terpineol, 2-(2-butoxyethoxy)ethyl acetate, 2,2,4-trimetyl-1,3-pentanediol diisobutyrate, 1,2-propylene carbonate, carbitol acetate, butyl carbitol acetate, butyl carbitol, ethyl carbitol acetate, 2-phenoxy ethanol, hexylene glycol, dibutylphthalate, dibasic ester (DBE), dibasic ester 9 (DBE-9), dibasic ester 7 (DBE-7), ethylacetate, toluene, isopropanol, ethanol, acetone, water and mixtures thereof.

Suitable commercially available solvents for use in the present invention include but are not limited to ethyl acetate and ethylene glycol from Brenntag, butyl acetate from Shell Chemicals and propylene glycol from Lyondell.

An ionically conductive composition according to the present invention may have a solvent present in an amount from 0 to 80% by weight of the total weight of the composition, preferably from 20 to 80% and more preferably from 40 to 80%.

The solvent may be used to dissolve the thermoplastic resin and this way to improve the processability of the composition. If the quantity of the solvent is too low, this may lead to processability problems due to the fact that the viscosity is too high, and the selected thermoplastic resin may not be fully soluble. Whereas too high quantity may lead to a loss of functionality, and the viscosity of the adhesive is too low to process.

In one embodiment, when the thermal sensor according to the present invention is used to sense the temperature from the skin, the ionically conductive composition may be i) essentially free from a hydrogel, preferably does not contain more than 0.5 wt.-%, or 0.1 wt.-%, or 0.001 wt.-% of a hydrogel, or does not contain a hydrogel, based on the total weight of the electrode; and/or (ii) essentially free from an aqueous electrolyte paste, preferably does not contain more than 0.5 wt.-%, or 0.1 wt.-%, or 0.001 wt.-% of an aqueous electrolyte paste, or does not contain an aqueous electrolyte paste, based on the total weight of the electrode; and/or (iii) essentially free from water, preferably does not contain more than 2 wt.-%, or 0.5 wt.-%, or 0.01 wt.-% of water, or does not contain water, based on the total weight of the electrode.

An ionically conductive composition according to the present invention may have a thermal curing temperature from 20°C to 150°C, more preferably from 80°C to 130°C.

An ionically conductive composition according to the present invention may have a thermal curing time from one second to two hours, preferably from three seconds to ten minutes.

An ionically conductive composition according to the present invention may have a temperature coefficient of <-1%/K, preferably <-3%/K.

The test method for temperature coefficient is typically comprising the following steps 1) placing the sample in an oven; 2) stabilising the temperature; and 3) measuring an impedance curve via cables fed through the oven door. For resistivity a value from the plateau (e.g. 134Hz) is chosen.

When the ionically conductive composition according to the present invention is in a form of a PSA, thickness of the PSA layer in a thermal sensor may be from 1µm to 200µm, preferably from 20µm to 100µm.

When the ionically conductive composition according to the present invention is in a form of a polymer, thickness of the polymer layer in a thermal sensor may be from 1µm to 200µm, preferably from 20µm to 100µm.

Any known method used for preparing layer of an ionically conductive composition comprising a thermoplastic resin in a form of a pressure-sensitive adhesive or a polymer can be used in the present invention. Specifically, examples include roll coating, gravure coating, reverse coating, roll brushing, spray coating, and air knife coating methods, immersing and curtain coating method, and extruding coating method with a die coater.

When the ionically conductive composition according to the present invention is in a form of a PSA the impedance of AgCl-PSA-AgCl sample (0.25 cm², 40 µm thickness of PSA) is preferable from 10¹Ω to 10⁹Ω, more preferably from 10²Ω to 10⁷Q wherein said impedance is measured by connecting two electrodes coated each with 25 µm of an ionic conductive PSA having a contact area of 0.25 cm². The same values apply when the ionically conductive composition according to the present invention is in a form of a polymer.

When the thermal sensor is used to sense temperature from skin, it is important that the ionically conductive composition according to the present invention is skin compatible. Therefore, it is preferred that the cell vitality in epidermis test is more than 50%, preferably more than 80%.

The skin compatibility of the ionically conductive composition is measured in an in-vitro skin irritation test using an OS-REp model (Open-Source Reconstructed Epidermis). 25 µL of the ionically conductive composition is applied to the epidermis model. 42h incubation and 3h incubation with MTT (200 µl, 1 mg/ml MTT (3-(4,5-Dimethylthiazol-2-yl)-2,5-diphenyltetrazolium bromide)) is performed and subsequently a formazan extraction is performed and the optical density at 570-590 nm is measured. The relative vitality of the cells is calculated by the optical density.

It is noted that the skin irritation test is a modified version of an OS-REp test according to OECD TG 439, which is a protocol for the identification of irritant neat substances and salts. The usual contact time of the potential irritant with the skin model is 35min. Subsequently the substance to be tested will be washed off and an incubation time of 42h starts. For a relative vitality of the cells >50% the substance can be considered being non-irritant. Due the fact that ionically conductive composition is tested, which cannot be washed off, the contact time was significantly longer, 42h instead of 35min, indicating that the present test conditions are harsher.

One advantage of the ionically conductive composition according to the present invention is that the composition can be deposited on a surface by printing technologies. An ionically conductive composition may be applied to a surface for example by screen printing, stencil printing, flexography printing, rotogravure printing and rotary screen printing.

The present invention relates to a thermal sensor comprising an ionically conductive composition and a conductive layer, wherein said ionically conductive composition comprises an ionic liquid and a thermoplastic resin and wherein said conductive layer is in contact with said ionically conductive composition.

The conductive layer according to the present invention comprise an electrically conductive medium or material, preferably the conductive layer is selected from the group consisting of carbon layer, a metal, a bulk metal, metal salt and mixtures thereof, preferably selected from the group consisting of a copper, silver, gold, aluminium, stainless steel, Ag/AgCl, a carbon layer and mixtures thereof.

The conductive layer can also be called an electrode.

The conductive layer may have a thickness of 0.1 to 500 µm, preferably from 0.5 to 150 µm, more preferably from 1 to 25 µm, and even more preferably 1 to 20 µm.

The Applicant has found out that the above thickness ranges can be printed while maintaining a high quality and providing a good conductivity.

According to the present invention, the conductive layer is in contact with the ionically conductive composition, meaning that the ionically conductive composition is covering at least a part of the conductive layer.

In one embodiment, the thermal sensor according to the present invention the sensor comprises two conductive layers, wherein the ionically conductive composition is located between the two conductive layers. This configuration may be used in any standalone sensor, i.e. a sensor which can be be taken to any environment and measure.

In one embodiment, the thermal sensor has one conductive layer. This configuration is used only in the situation, wherein the thermal sensor is placed on the medium to be measured and the current is supposed to flow through the medium.

In one embodiment, the thermal sensor is formed from two individual sensors located next to each other. In other words, the thermal sensor comprises two thermal sensors according to the present invention located next to each other having a space between them. This configuration is used specially when the thermal sensor is used to sense temperature from skin.

In one embodiment, the thermal sensor according to the present invention may further comprise a substrate. The substrate may be a flexible film. The substrate may be selected from the group consisting of polyolefin films, polycarbonate films, thermoplastic polyurethane films, silicone films, woven films, non-woven films, or paper films, in particular polyethylene films, polypropylene films, polyethylene terephthalate films or thermoplastic polyurethane films.

The substrate may have a thickness of from 10 µm to 500 µm, preferably from 25 µm to 150 µm.

In one embodiment the thermal sensor according to the present invention may comprise a release liner. Preferably the release liner is selected from siliconized paper or plastic release liner.

In some embodiments the substrate may have carbon, Ag or Ag/AgCl layer on top of it.

In one embodiment, the thermal sensor may be encapsulated. There are several suitable encapsulant materials which can be used in the present invention. Non-limiting examples are polyolefins, polycarbonates, thermoplastic polyurethanes, silicons, more specific examples of these encapsulants are such as polyethylene, polypropylene, polyethylene terephthalate and thermoplastic polyurethane. Further, non-limiting examples are ethylene vinyl acetate, polyvinylpyrrolidone, silicone-polyurethane hybrids, acrylates, epoxides, polyamides, silicones, benzocyclobutenes, polyxylenes and siloxane polyimides.

The present invention also relates to a method for sensing a temperature from a conductive material by using a thermal sensor according to the present invention. The conductive material may be any conductive material or surface. Non-limiting examples are skin, a metal surface, and a conductive polymer. The thermal sensor according to the present invention uses the temperature dependence of the electrical response of the ionically conductive composition. The temperature can be sensed by using one or two thermal sensors according to the present invention. Either one sensor using two conductive layers or two sensors using each one conductive layer are applied to the surface. The resistance and impedance of the sensor is chosen so that it is significantly higher than the impedance and/or resistance of the surface. The impedance or resistance is then measured with the current passing through the conductive surface.

### Examples

### Example 1 Conductive PSA with 7.5% EMIM Triflate and 2.5% EMIM Chloride

Temperature sensing adhesive was prepared by combining 5 g LOCTITE Duro-TAK 222A and ionic liquids 0.154 g of 1-ethyl-3-methylimidazolium trifluoromethanesulfonate and 0.058 g of 1-ethyl-3-methylimidazolium chloride. All components were mixed in a conditioning mixer for 3 minutes at 2000 rpm. The mixture was coated onto a release liner and dried at 120°C for 3 minutes and covered with another release liner.

For measurements electrodes were prepared by transferring the dried adhesive film to TPU substrates containing an Ag/AgCl layer on top. The Ag/AgCl layer was prepared by printing Loctite EDAG PE-409 using a screen mesh "64/46" followed by a drying step of 15 minutes at 120°C.

Electrodes were cut and attached to each other to form an Ag/AgCl-PSA-Ag/AgCl capacitor with an area of 4 cm² and 60 µm PSA thickness. The electrode pair was connected with alligator clips and the impedance and resistance of the capacitor was measured with a potentiostat from Metrohm Autolab at a frequency range from 9 x 10⁵ to 0.1 Hz (Impedance) and a voltage of 10mV. The temperature was regulated by fixing the sample on the surface of a hotplate and measuring the temperature via a thermocouple fixed inside a sample-like setup and put on the hotplate directly next to the sample.

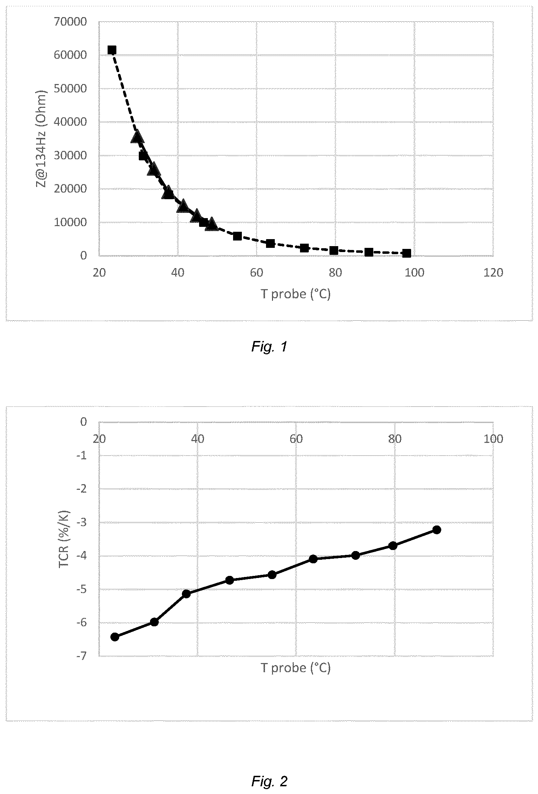

The temperature dependence of the impedance is illustrated in the figure 1 (impedance at 134Hz vs. temperature for example 1). The graph includes two different curves measured over different temperature ranges but measured on the same probe. The resulting calculated temperature coefficients if resistance (TCR) are between -3%/K and -7%/K. The temperature coefficient of impedance vs. temperature for example 1 is illustrated in figure 2.

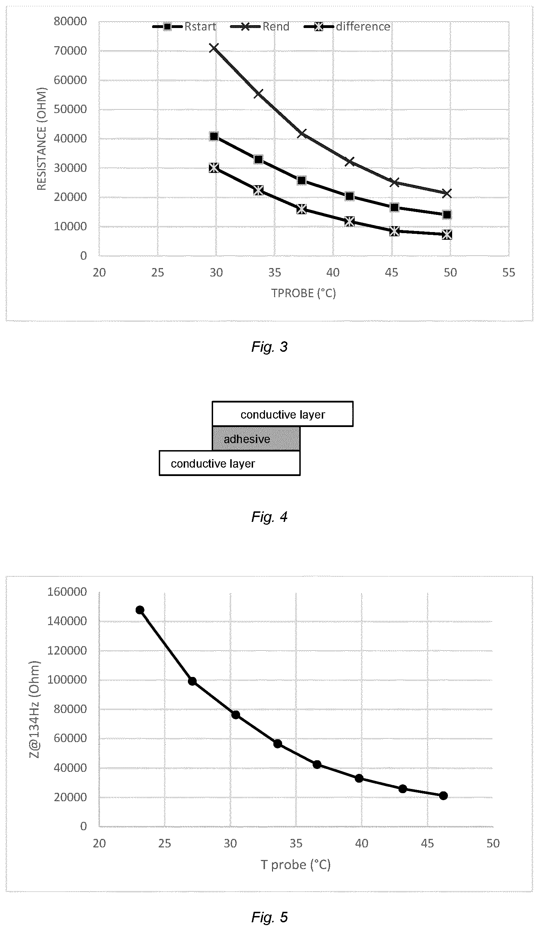

When measuring the DC resistance by applying a DC voltage the value changes over time (increases). The starting value Rstart (here averaged over the first 5s) roughly corresponds to the bulk resistance, since the interface resistance is not visible while the interface capacitance is charged, the end value Rend approaches the true DC resistance including the interface resistance (which can be estimated (and used for measurement) by the difference. That way different effects can be utilised for sensing and values for best evaluation can be chosen. Figure 3 illustrates DC measured resistances of example 1 vs. temperature.

### Example 2 Conductive PSA with 1% EMIM-Chloride

Temperature sensing adhesive was prepared by combining 5 g LOCTITE Duro-TAK 222A and the ionic liquid 0.020 g of 1-ethyl-3-methylimidazolium chloride were mixed in a conditioning mixer for 3 minutes at 2000 rpm. The mixture was coated onto a release liner and dried at 120°C for 3 minutes and covered with another release liner.

For measurements the electrodes were prepared by transferring the dried adhesive film to TPU substrates containing an Ag/AgCl layer on top. The Ag/AgCl layer was prepared via printing Loctite EDAG PE-409 using a screen mesh "64/46" following by a drying step of 15 minutes at 120°C.

Electrodes were cut and attached to each other to form an Ag/AgCl-PSA-Ag/AgCl capacitor with an area of 4 cm² and 60 µm PSA thickness. The capacitor setup is illustrated in figure 4. The electrode pair was connected with alligator clips and the impedance and resistance of the capacitor was measured with a potentiostat from Metrohm Autolab at a frequency range from 9 x 10⁵ to 0.1 Hz (impedance) and a voltage of 10mV. The temperature was regulated by fixing the sample on the surface of a hotplate and measuring the temperature via a thermocouple fixed inside a sample-like setup and put on the hotplate directly next to the sample.

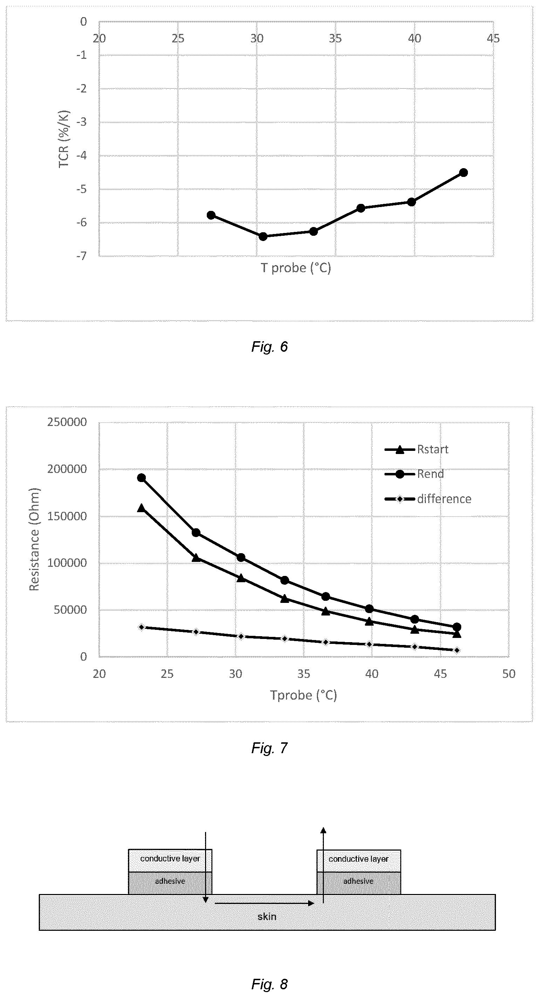

Impedance at 134Hz vs. temperature for example 2 is illustrated in figure 4. Respectively the resulting TCR is between -4 and -7%/K which is illustrated in Figure 5. Figure 6 illustrates DC measured resistances of example 2. The difference (i.e. interface resistance) in this example exhibited very good linearity.

### Example 3 Conductive PSA with 1% Chloride: electrode for measurement on skin

An adhesive with high resistance/impedance can be used to measure resistance/temperature on and through skin. That way excellent thermal contact is given. The high resistance is necessary so that in the series connection the adhesive's resistance is dominating.

Two single electrodes (as in example 2) are taken here for the application on skin. These are adhered on skin 2cm apart. Figure 8 illustrates a setup used to measure directly from skin.

When measuring on skin, it is more difficult to get a reference value (in the end the correlation needs to be to the body temperature. Reference points are a typical body temperature (37°C) as an upper limit and the skin temperature measured with an infrared temperature (31°C) as a lower limit. It is noted that the IR measured the temperature on uncovered skin and is therefore expected to give a lower result than the adhesive sensor (which is closer to the skin temperature).

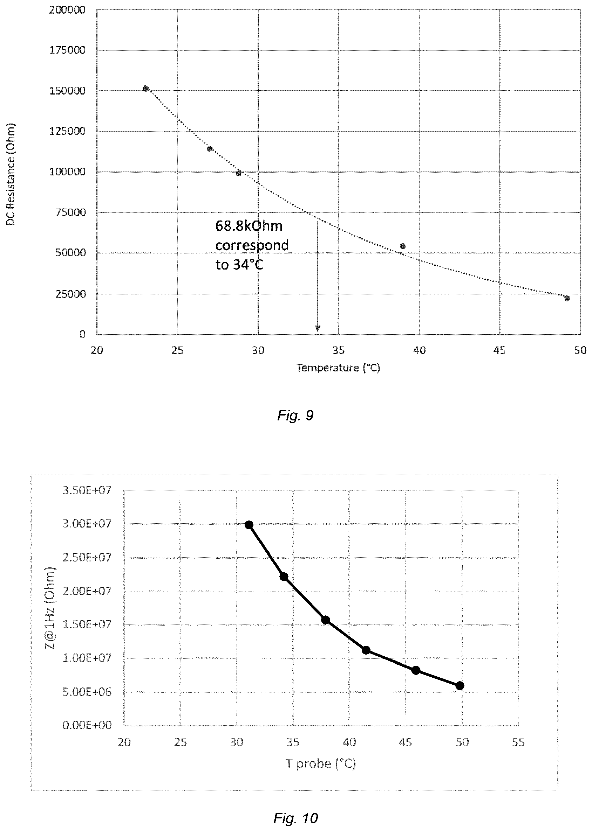

By comparing the measured value (68.8kOhm by multimeter (DC)) with measurements of the capacitor setup one gets an estimation of 34°C which is in the expected range and therefore a general feasibility is shown. Figure 9 illustrates DC resistance measured on skin compared to DC resistance vs. temperature of capacitor setup for example 3.

### Example 4 Conductive PSA based on non-polar adhesive

Temperature sensing adhesives was prepared by combining 3.5 g LOCTITE Duro-TAK 235A (53% solid content) and 0.2g EMIM triflate. Components were mixed in a conditioning mixer for 3 minutes at 2000 rpm. Subsequently, the mixture was coated onto a release liner and dried at 120°C for 3 minutes and covered with another release liner.

For measurements electrodes were prepared by transferring the dried adhesive film to TPU substrates containing an Ag/AgCl layer on top. The Ag/AgCl layer has been prepared via printing Loctite EDAG PE-409 using a screen mesh "64/46" following by a drying step of 15 minutes at 120°C.

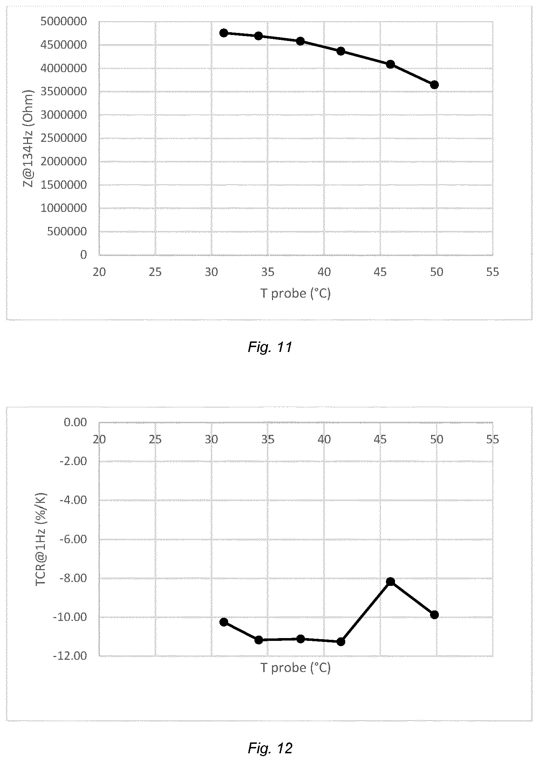

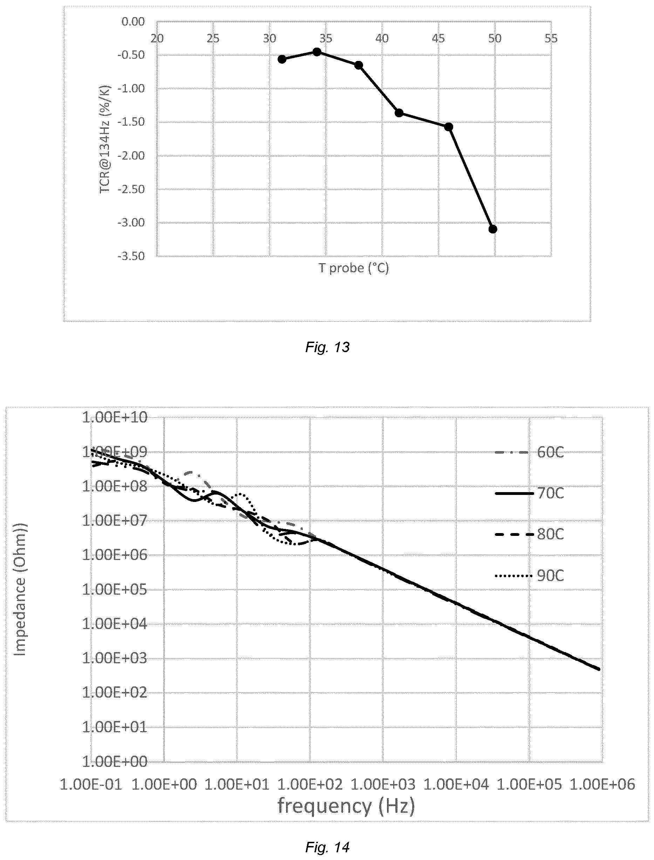

Electrodes were cut and attached to each other to form an Ag/AgCl-PSA-Ag/AgCl capacitor with an area of 4 cm² and 60 µm PSA thickness. The electrode pair was connected with alligator clips and the impedance and resistance of the capacitor was measured with a potentiostat from Metrohm Autolab at a frequency range from 9 x 10⁵ to 0.1 Hz (Impedance) and a voltage of 10mV. The temperature was regulated by fixing the sample on the surface of a hotplate and measuring the temperature via a thermocouple fixed inside a sample-like setup and put on the hotplate directly next to the sample. The temperature dependence of the impedance is illustrated in figure 10 (1Hz and 134Hz). Figure 11 illustrates impedance at 134Hz vs. temperature for example 4. The Impedance at 1Hz is corresponding to a bulk resistance of the adhesive while the impedance at 134Hz is corresponding to the bulk capacitance. The corresponding TCRs can be seen in the following figures. Figure 12 illustrates temperature coefficient of impedance at 1Hz vs. temperature for example 4. Whereas figure 13 illustrates temperature coefficient of impedance at 134Hz vs. temperature for example 4. The TCR at 1Hz is high from the start, at 134Hz higher values are only seen for elevated temperatures. However, in both cases a significant change of impedance is seen when changing the temperature making this a suitable sensor material.

### Comparative Example 1 non-conductive coating based on thermoplastic polyester resin

The coating was made by combining 3 g Vitel 2200B and 7 g DBE. Vitel 2200B was prior dissolved in DBE at 60°C using a mechanical steerer. All components were mixed in a conditioning mixer for 2 minutes at 2000 rpm before coated on top of a dry Ag layer having thickness of 10 µm made by LOCTITE ECI 1501 E&C printed on a PET substrate. A dry temperature sensing coating having thickness of 20 µm was formed after drying the wet coating for 15 minutes at 120°C.

For measurements, samples were prepared by applying an electrically conductive tape as counter electrode (contact area: 4 cm²) on top of the dried temperature sensing coating. The sample was connected with alligator clips and the impedance of the capacitor was measured with a potentiostat from Metrohm Autolab at a frequency range from 9 x 10⁵ to 0.1 Hz (Impedance) and a voltage of 10mV. The temperature was regulated by placing the sample in the center of an oven at different temperatures and waiting for the impedance curve of the sample to stabilize.

A comparison of the impedance spectra at various temperatures is illustrated in figure 14. The spectra shows no difference in the high frequency range and at best a minimum effect in the low frequency range (overshadowed by 50Hz resonance).

### Example 5 Conductive coating based on thermoplastic polyester resin (Tg: 69°C)

Temperature sensing coating was made by combining 3 g Vitel 2200B, 7 g DBE and 0.3 g 1-Ethyl-3-methylimidazolium trifluoromethanesulfonate. Vitel 2200B was prior dissolved in DBE at 60°C using a mechanical steerer. All components were mixed in a conditioning mixer for 2 minutes at 2000 rpm before coated on top of a dry 10 µm thick Ag layer made by LOCTITE ECI 1501 E&C printed on a PET substrate. A dry temperature sensing coating having thickness of 20 µm was formed after drying the wet coating for 15 minutes at 120°C.

For measurements, samples were prepared by applying an electrically conductive tape as counter electrode (contact area: 4 cm²) on top of the dried temperature sensing coating. The sample was connected with alligator clips and the impedance of the capacitor was measured with a potentiostat from Metrohm Autolab at a frequency range from 9 x 10⁵ to 0.1 Hz (Impedance) and a voltage of 10mV. The temperature was regulated by placing the sample in the center of an oven at different temperatures and waiting for the impedance curve of the sample to stabilize.

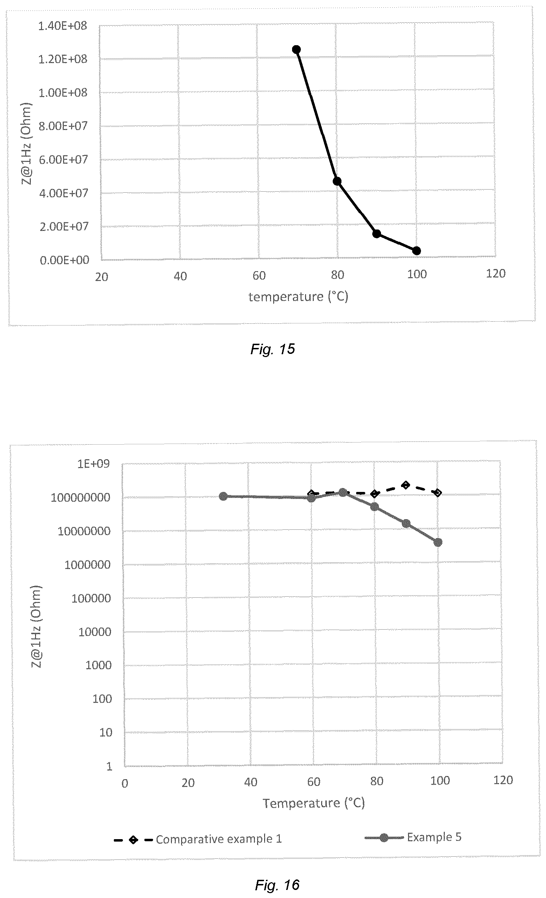

The temperature dependence of the example 5 is illustrated in figure 15. It is noted that a high temperature is chosen to exceed the glass temperature of the material. A strong temperature impact can also be observed. The resulting temperature coefficients are exceeding -6%/K. Figure 16 illustrates comparison of impedance at 1Hz vs. temperature for example 5 and comparative example 1.

### Example 6 Conductive coating based on thermoplastic phenoxy resin (Tg: 97°C)

Temperature sensing coating was made by combining 2,0g PKHJ, 8,0 g DBE and 0.223 g 1-ethyl-3-methylimidazolium trifluoromethanesulfonate. PKHJ was prior dissolved in DBE at 60°C using a mechanical steerer. All components were mixed in a conditioning mixer for 2 minutes at 2000 rpm before coated on top of a dry 10 µm thick Ag layer made by LOCTITE ECI 1501 E&C printed on a PET substrate. A dry temperature sensing coating having thickness of 20 µm was formed after drying the wet coating for 15 minutes at 120°C.

For measurements, samples were prepared by applying an electrically conductive tape as counter electrode (contact area: 4 cm²) on top of the dried temperature sensing coating. The sample was connected with alligator clips and the impedance of the capacitor was measured with a potentiostat from Metrohm Autolab at a frequency range from 9 x 10⁵ to 0.1 Hz (Impedance) and a voltage of 10mV. The temperature was regulated by placing the sample in the center of an oven at different temperatures and waiting for the impedance curve of the sample to stabilize.

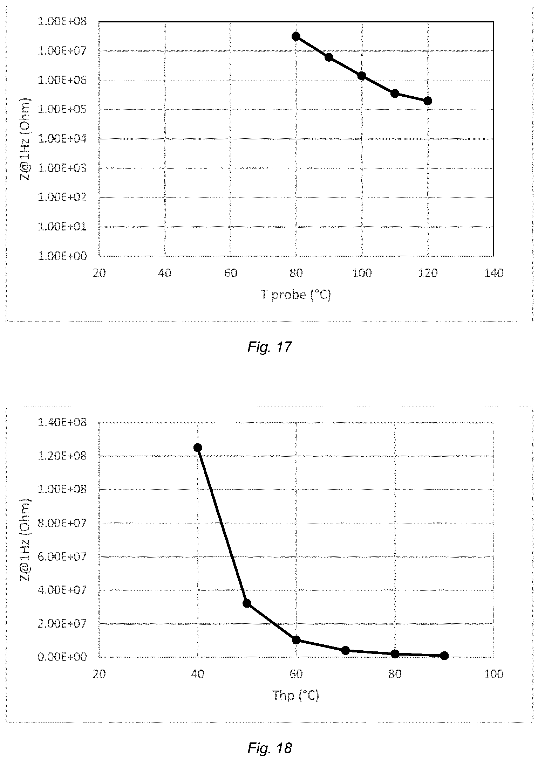

The temperature dependence of the impedance is illustrated in figure 17. The corresponding temperature coefficients are between -4%/K and 8%/K.

### Example 7 Conductive coating based on thermoplastic polyester resin (Tg: 48°C)

Temperature sensing coating was made by combining 2,5 g Vitel 5844B, 7,5 g DBE and 0.277 g 1-Ethyl-3-methylimidazolium trifluoromethanesulfonate. Vitel 5844B was prior dissolved in DBE at 60°C using a mechanical steerer. All components were mixed in a conditioning mixer for 2 minutes at 2000 rpm before coated on top of a dry 10 µm thick Ag layer made by LOCTITE ECI 1501 E&C printed on a PET substrate. A dry temperature sensing coating having thickness of 20 µm was formed after drying the wet coating for 15 minutes at 120°C.

For measurements, samples were prepared by applying an electrically conductive tape as counter electrode (contact area: 4 cm²) on top of the dried temperature sensing coating. The sample was connected with alligator clips and the impedance of the capacitor was measured with a potentiostat from from Metrohm Autolab at a frequency range from 9 x 10⁵ to 0.1 Hz (Impedance) and a voltage of 10mV. The temperature was regulated by placing the sample in the centre of an oven at different temperatures and waiting for the impedance curve of the sample to stabilize. The temperature dependence is illustrated in figure 18. The corresponding temperature coefficients are between - 5%/K and -8%/K.

### Example 8 Conductive coating based on thermoplastic polyester resins

Temperature sensing coating was made by combining 1,25 g Vitel 5844B, 1,25 g Vitel 2200B, 7,5 g DBE and 0.277 g 1-ethyl-3-methylimidazolium trifluoromethanesulfonate. Vitel 5844B and Vitel 2200B were prior dissolved in DBE at 60°C using a mechanical steerer. All components were mixed in a conditioning mixer for 2 minutes at 2000 rpm before coated on top of a dry 10 µm thick Ag layer made by LOCTITE ECI 1501 E&C printed on a PET substrate. A dry temperature sensing coating having thickness of 20 µm was formed after drying the wet coating for 15 minutes at 120°C.

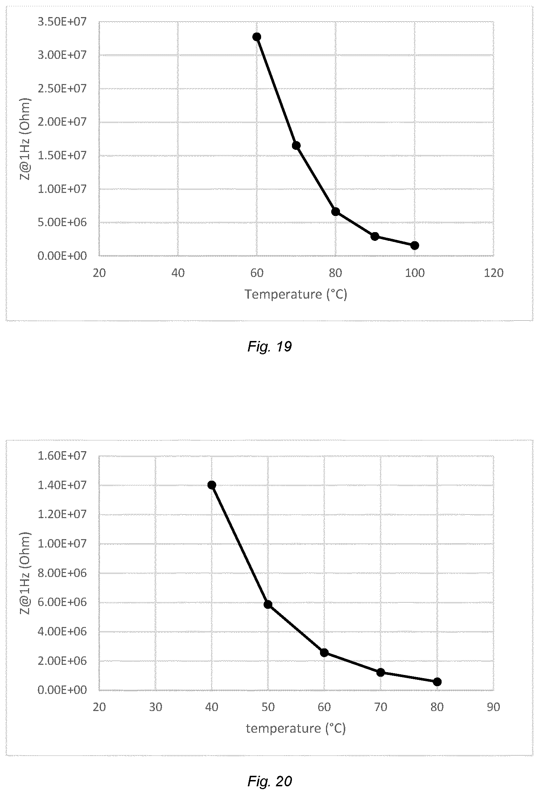

For measurements, samples were prepared by applying an electrically conductive tape as counter electrode (contact area: 4 cm²) on top of the dried temperature sensing coating. The sample was connected with alligator clips and the impedance of the capacitor was measured with a potentiostat from Metrohm Autolab at a frequency range from 9 x 10⁵ to 0.1 Hz (Impedance) and a voltage of 10mV. The temperature was regulated by placing the sample in the center of an oven at different temperatures and waiting for the impedance curve of the sample to stabilize. The temperature dependence of the impedance at 1Hz is illustrated in figure 19. The corresponding temperature coefficients are between -4%/K and -6%/K.

### Example 9 conductive coating based on thermoplastic polyester and polyurethane resins

Temperature sensing coating was made by combining 1,25 g Vitel 5844B, 1,25 g Estane 5703, 7,5 g DBE and 0.277 g 1-ethyl-3-methylimidazolium trifluoromethanesulfonate. Vitel 5844B and Estane 5703 were prior dissolved in DBE at 60°C using a mechanical steerer. All components were mixed in a conditioning mixer for 2 minutes at 2000 rpm before coated on top of a dry 10 µm thick Ag layer made by LOCTITE ECI 1501 E&C printed on a PET substrate. A dry temperature sensing coating having thickness of 20 µm was formed after drying the wet coating for 15 minutes at 120°C.

For measurements, samples were prepared by applying an electrically conductive tape as counter electrode (contact area: 4 cm²) on top of the dried temperature sensing coating. The sample was connected with alligator clips and the impedance of the capacitor was measured with a potentiostat from Metrohm Autolab at a frequency range from 9 x 10⁵ to 0.1 Hz (Impedance) and a voltage of 10mV. The temperature was regulated by placing the sample in the center of an oven at different temperatures and waiting for the impedance curve of the sample to stabilize. The temperature dependence is illustrated in figure 20. The corresponding temperature coefficients are between -5%/K and -6%/K.

### Example 10 Conductive coating based on thermoplastic polyester resin

Temperature sensing coating was made by combining 3 g Vitel 2200B, 7 g DBE and 0.3 g 1-ethyl-3-methylimidazolium methanesulfonate. Vitel 2200B was prior dissolved in DBE at 60°C using a mechanical steerer. All components were mixed in a conditioning mixer for 2 minutes at 2000 rpm before coated on top of a dry 10 µm thick Ag layer made by LOCTITE ECI 1501 E&C printed on a PET substrate. A dry temperature sensing coating having thickness of 20 µm was formed after drying the wet coating for 15 minutes at 120°C.

For measurements, samples were prepared by applying an electrically conductive tape as counter electrode (contact area: 4 cm²) on top of the dried temperature sensing coating. The sample was connected with alligator clips and the impedance of the capacitor was measured with a potentiostat from Metrohm Autolab at a frequency range from 9 x 10⁵ to 0.1 Hz (Impedance) and a voltage of 10mV. The temperature was regulated by placing the sample in the center of an oven at different temperatures and waiting for the impedance curve of the sample to stabilize.

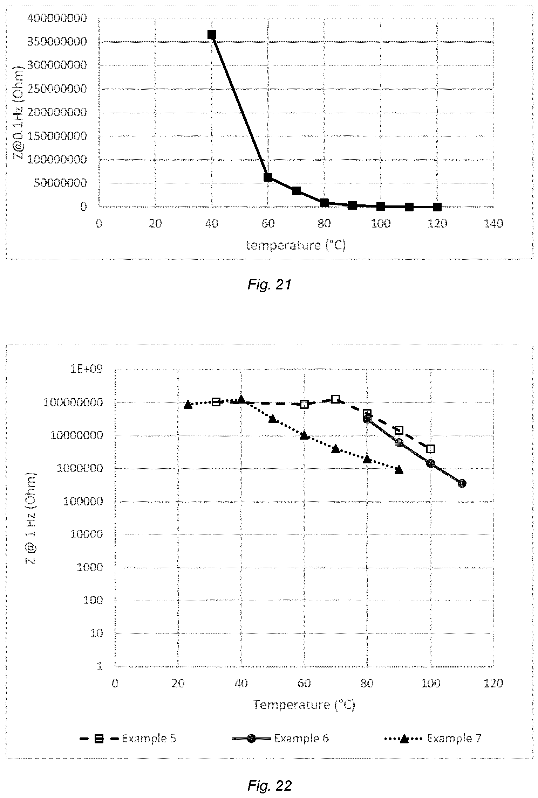

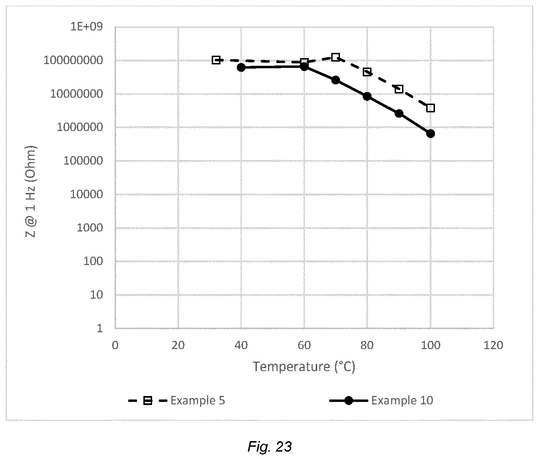

The temperature dependence of the sample is illustrated in figure 21. It is noted that a high temperature is chosen to exceed the glass temperature of the material. A strong temperature impact is observed. The resulting temperature coefficients are between -4%/K and -10%/K. Figure 22 illustrates a comparison of impedance at 1Hz vs. temperature for examples 5, 6 and 7 (comparison of polymers). Figure 23 illustrates a comparison of impedance at 1Hz vs temperature for examples 5 and 10 (comparison of ionic liquids).

## Claims

1. A thermal sensor comprising an ionically conductive composition and a conductive layer, wherein said ionically conductive composition comprises an ionic liquid and a thermoplastic resin, wherein said ionic liquid is selected from the group consisting of 1-ethyl-3-methylimidazolium acetate, 1-ethyl-3-methylimidazolium methane sulfonate, 1-ethyl-3-methylimidazolium trifluormethane sulfonate, 1-ethyl-3-methylimidazolium chloride, 1-ethyl-3-methylimidazolium ethyl sulphate, 1-ethyl-3-methylimidazolium diethylphosphate, 1-ethyl-3-methylimidazolium thiocyanate, 1-ethyl-3-methylimidazolium dicyanamide, 1-ethyl-3-methylimidazolium benzoate, choline trifluormethanesulfonate, choline saccharinate, choline acesulfamate, choline N-cyclohexylsulfamate, tris(2-hydroxyethyl)methylammonium methyl sulphate, 1-allyl-3-methylimidazolium bis(trifluoromethylsulfonyl)imide, choline acetate and mixtures thereof and wherein said conductive layer is in contact with said ionically conductive composition.

2. The thermal sensor according to claim 1, wherein said ionic liquid is present in an amount from 0.1 to 50% by weight of the total weight of the dry composition, preferably from 0.3 to 25% and more preferably from 0.5 to 15%.

3. The thermal sensor according to claim 1 or 2, wherein said thermoplastic resin is selected from the group consisting of thermoplastic polyurethanes, polyesters, poly(meth)acrylates, polysiloxanes, halogenated vinyl or vinylidene polymers, polyamide copolymers, phenoxy resins, polyethers, polyketones, polyvinyl butyral, polyvinyl pyrrolidone, polyimides, polyols, cellulose and mixtures thereof, preferably thermoplastic resin is selected from the group consisting of thermoplastic polyurethanes, polyesters, poly(meth)acrylates, phenoxy resins and mixtures thereof.

4. The thermal sensor according to any of claims 1 to 3, wherein said thermoplastic resin is present in an amount from 10 to 99% by weight of the total weight of the dry composition, preferably from 40 to 98% and more preferably from 50 to 95%.

5. The thermal sensor according to any of claims 1 to 4, wherein said conductive layer is selected from a metal, a bulk metal or metal salt and mixtures thereof, preferably selected from a copper, silver, gold, aluminium, stainless steel, Ag/AgCl, a carbon layer and mixtures thereof.

6. The thermal sensor according to any of claims 1 to 5, wherein said conductive layer has a thickness of 0.1 to 500 µm, preferably from 0.5 to 150 µm, more preferably from 1 to 25 µm, and even more preferably 1 to 20 µm.

7. The thermal sensor according to any of claims 1 to 6, wherein the sensor comprises two conductive layers, and wherein said ionically conductive composition is between the two conductive layers.

8. The thermal sensor according to any of claim 1 to 7, wherein the thermal sensor comprises two thermal sensors located next to each other.

9. The thermal sensor according to any of claim 1 to 8, wherein the thermal sensor is encapsulated.

10. A method for sensing a temperature from a conductive material by using a thermal sensor according to any of claims 1 to 9.

## Patentansprüche

1. Thermosensor, umfassend eine ionisch leitfähige Zusammensetzung und eine leitfähige Schicht, wobei die ionisch leitfähige Zusammensetzung eine ionische Flüssigkeit und ein thermoplastisches Harz umfasst, wobei die ionische Flüssigkeit ausgewählt ist aus der Gruppe bestehend aus 1-Ethyl-3-methylimidazoliumacetat, 1-Ethyl-3-methylimidazoliummethansulfonat, 1-Ethyl-3-methylimidazoliumtrifluormethansulfonat, 1-Ethyl-3-methylimidazoliumchlorid, 1-Ethyl-3-methylimidazoliumethylsulfat, 1-Ethyl-3-methylimidazoliumdiethylphosphat, 1-Ethyl-3-methylimidazoliumthiocyanat, 1-Ethyl-3-methylimidazoliumdicyanamid, 1-Ethyl-3-methylimidazoliumbenzoat, Cholintrifluormethansulfonat, Cholinsaccharinat, Cholinacesulfamat, Cholin-N-cyclohexylsulfamat, Tris(2-hydroxyethyl)methylammoniummethylsulfat, 1-Allyl-3-methylimidazoliumbis(trifluoromethylsulfonyl)imid, Cholinacetat und Gemischen davon, und wobei die leitfähige Schicht in Kontakt mit der ionisch leitfähigen Zusammensetzung steht.

2. Thermosensor nach Anspruch 1, wobei die ionische Flüssigkeit in einer Menge von 0,1 bis 50 Gew.-% des Gesamtgewichts der Trockenzusammensetzung, vorzugsweise von zu 0,3 bis 25 % und weiter bevorzugt von zu 0,5 bis 15 % vorhanden ist.

3. Thermosensor nach Anspruch 1 oder 2, wobei das thermoplastische Harz ausgewählt ist aus der Gruppe bestehend aus thermoplastischen Polyurethanen, Polyestern, Poly(meth)acrylaten, Polysiloxanen, halogenierten Vinyl- oder Vinylidenpolymeren, Polyamidcopolymeren, Phenoxyharzen, Polyethern, Polyketonen, Polyvinylbutyral, Polyvinylpyrrolidon, Polyimiden, Polyolen, Cellulose und Mischungen davon, wobei das thermoplastische Harz vorzugsweise aus der Gruppe ausgewählt ist bestehend aus thermoplastischen Polyurethanen, Polyestern, Poly(meth)acrylaten, Phenoxyharzen und Mischungen davon.

4. Thermosensor nach einem der Ansprüche 1 bis 3, wobei das thermoplastische Harz in einer Menge von zu 10 bis 99 Gew.-% des Gesamtgewichts der Trockenzusammensetzung, vorzugsweise von zu 40 bis 98 % und weiter bevorzugt von zu 50 bis 95 % vorhanden ist.

5. Thermosensor nach einem der Ansprüche 1 bis 4, wobei die leitfähige Schicht ausgewählt ist aus einem Metall, einem Metallmassenmaterial oder einem Metallsalz und Gemischen davon, vorzugsweise ausgewählt aus Kupfer, Silber, Gold, Aluminium, Edelstahl, Ag/AgCl, einer Kohlenstoffschicht und Gemischen davon.

6. Thermosensor nach einem der Ansprüche 1 bis 5, wobei die leitfähige Schicht eine Dicke von 0,1 bis 500 µm, vorzugsweise von 0,5 bis 150 µm, weiter bevorzugt von 1 bis 25 µm und noch weiter bevorzugt von 1 bis 20 µm aufweist.

7. Thermosensor nach einem der Ansprüche 1 bis 6, wobei der Sensor zwei leitfähige Schichten umfasst, und wobei sich die ionisch leitfähige Zusammensetzung zwischen den beiden leitfähigen Schichten befindet.

8. Thermosensor nach einem der Ansprüche 1 bis 7, wobei der Wärmesensor zwei nebeneinander angeordnete Thermosensoren umfasst.

9. Thermosensor nach einem der Ansprüche 1 bis 8, wobei der Thermosensor gekapselt ist.

10. Verfahren zum Erfassen der Temperatur eines leitfähigen Materials unter Verwendung eines Thermosensors nach einem der Ansprüche 1 bis 9.

## Revendications

1. Capteur thermique comprenant une composition conductrice d'ions et une couche conductrice, dans lequel ladite composition conductrice d'ions comprend un liquide ionique et une résine thermoplastique, dans lequel ledit liquide ionique est choisi dans le groupe constitué d'acétate de 1-éthyl-3-méthylimidazolium, sulfonate de méthane de 1-éthyl-3-méthylimidazolium, sulfonate de trifluorméthane de 1-éthyl-3-méthylimidazolium, chlorure de 1-éthyl-3-méthylimidazolium, sulfate d'éthyle de 1-éthyl-3-méthylimidazolium, 1-éthyl-3-méthylimidazolium diéthylphosphate, 1-éthyl-3-méthylimidazolium thiocyanate, 1-éthyl-3-méthylimidazolium dicyanamide, 1-éthyl-3-méthylimidazolium benzoate, trifluorméthanesulfonate de choline, saccharinate de choline, acésulfamate de choline, N-cyclohexylsulfamate de choline, tris(2-hydroxyéthyl)méthylammonium méthyl sulfate, 1-allyl-3-méthylimidazolium bis(trifluorométhylsulfonyl)imide, acétate de choline et des mélanges de ceux-ci et dans lequel ladite couche conductrice est en contact avec ladite composition à conductivité ionique.

2. Capteur thermique selon la revendication 1, dans lequel ledit liquide ionique est présent en une quantité comprise entre 0,1 et 50 % en poids du poids total de la composition sèche, de préférence comprise entre 0,3 et 25 %, et plus préférablement comprise entre 0,5 et 15 %.

3. Capteur thermique selon la revendication 1 ou 2, dans lequel ladite résine thermoplastique est choisie dans le groupe constitué de polyuréthanes thermoplastiques, polyesters, poly(méth)acrylates, polysiloxanes, polymères halogénés de vinyle ou de vinylidène, copolymères de polyamide, résines phénoxy, polyéthers, polycétones, butyral de polyvinyle, pyrrolidone de polyvinyle, polyimides, polyols, cellulose et les mélanges de ceux-ci, polycétones, butyral de polyvinyle, pyrrolidone de polyvinyle, polyimides, polyols, cellulose et des mélanges de ceux-ci, de préférence, la résine thermoplastique est choisie dans le groupe constitué de polyuréthanes thermoplastiques, polyesters, poly(méth)acrylates, résines phénoxy et des mélanges de ceux-ci.

4. Capteur thermique selon l'une quelconque des revendications 1 à 3, dans lequel ladite résine thermoplastique est présente en une quantité comprise entre 10 et 99 % en poids du poids total de la composition sèche, de préférence entre 40 et 98 % et plus préférablement entre 50 et 95 %.

5. Capteur thermique selon l'une quelconque des revendications 1 à 4, dans lequel ladite couche conductrice est choisie parmi un métal, un métal en vrac ou un sel métallique et des mélanges de ceux-ci, de préférence parmi le cuivre, l'argent, l'or, l'aluminium, l'acier inoxydable, Ag/AgCl, une couche de carbone et des mélanges de ceux-ci.

6. Capteur thermique selon l'une quelconque des revendications 1 à 5, dans lequel ladite couche conductrice a une épaisseur de 0,1 à 500 µm, de préférence de 0,5 à 150 µm, plus préférablement de 1 à 25 µm, et encore plus préférablement de 1 à 20 µm.

7. Capteur thermique selon l'une quelconque des revendications 1 à 6, dans lequel le capteur comprend deux couches conductrices, et dans lequel la composition ionique conductrice se trouve entre les deux couches conductrices.

8. Capteur thermique selon l'une quelconque des revendications 1 à 7, dans lequel le capteur thermique comprend deux capteurs thermiques situés l'un à côté de l'autre.

9. Capteur thermique selon l'une quelconque des revendications 1 à 8, dans lequel le capteur thermique est encapsulé.

10. Procédé de détection de la température d'un matériau conducteur à l'aide d'un capteur thermique selon l'une quelconque des revendications 1 à 9.
